# EUROPÄISCHE PATENTSCHRIFT

(11) **EP 3 290 598 B1**
(45) Veröffentlichungstag und Bekanntmachung des Hinweises auf die Patenterteilung: **09.06.2021**
(21) Anmeldenummer: 17184892.2
(22) Anmeldetag: 04.08.2017
(51) Int. Cl.: E03C 1/02, E03C 1/10, E03C 1/04

(54) **ANSCHLUSSSOCKEL FÜR SANITÄRARMATUR MIT BODENSTEHENDER ARMATURSÄULE**
CONNECTION SOCKET FOR A BATHROOM FITTING WITH GROUND STANDING FITTING COLUMN
SOCLE DE RACCORDEMENT POUR ROBINETTERIE SANITAIRE POURVU D'UNE COLONNE D'ARMATURE REPOSANT SUR LE SOL

(30) Priorität: 09.08.2016 DE 102016214777
(43) Veröffentlichungstag der Anmeldung: 07.03.2018
(73) Patentinhaber: Hansgrohe SE, 77761 Schiltach (DE)
(72) Erfinder: Blattner, Joachim, 77716 Haslach (DE); Kleinbub, Markus, 77709 Wolfach (DE)
(74) Vertreter: Patentanwälte Ruff, Wilhelm, Beier, Dauster & Partner mbB

(56) Entgegenhaltungen:
- EP-A1- 1 006 241
- DE-A1- 19 622 368
- DE-A1-102007 030 153
- DE-A1-102009 040 191
- DE-A1-102010 030 661
- DE-A1-102011 082 120
- DE-A1-102012 201 699
- DE-U1-202016 100 225

## Beschreibung

Die Erfindung bezieht sich auf einen Anschlusssockel für eine Sanitärarmatur mit bodenstehender Armatursäule gemäß dem Oberbegriff des Anspruchs 1.

Typischerweise dient der Anschlusssockel dazu, die freistehende bzw. bodenstehende Sanitärarmatur mit ihrem bodenseitigen Armatursäulenende an einen oder mehrere gebäudeseitige Wasserversorgungsanschlüsse anzuschließen, z.B. an einen bodenseitigen Kaltwasser- und einen Warmwasseranschluss einer gebäudeseitigen Wasserversorgungsinstallation. Derartige Anschlusssockel befinden sich in verschiedenen Ausführungen auf dem Markt, beispielsweise zum Anschließen von Sanitärarmaturen in Form von freistehenden Mischerarmaturen für Badewannen und freistehenden Duschsäulen-Mischerarmaturen.

Die Offenlegungsschrift DE 10 2009 040 191 A1 offenbart einen solchen Anschlusssockel in Form eines Unterputzeinbaukörpers mit einem festen Lagerteil als Sockelbodenkörper und einem beweglichen Lagerteil als Sockeloberteil, wobei die beiden Lagerteile eine komplementär zueinander ausgerichtete Kugelkalottenform aufweisen. Zum lösbaren Anbringen der Armatursäule am Unterputzeinbaukörper dient dort ein Spannelement in Form eines geschlitzten Spannrings mit einem keilförmigen Querschnitt, mit dem er in eine entsprechend konisch verjüngte Aufnahme des beweglichen Lagerteils eingefügt werden kann. Nach dem Ansetzen der Armatursäule am beweglichen Lagerteil und einem vertikalen Ausrichten der Armatursäule wird der Spannring mit dem beweglichen Lagerteil verschraubt, wonach die Armatursäule zusammen mit dem beweglichen Lagerteil ausgerichtet werden kann. Abschließend wird das bewegliche Lagerteil an dem festen Lagerteil mittels Schrauben fixiert.

Die Offenlegungsschrift DE 10 2011 082 120 A1 offenbart einen Anschlussblock zum Anschluss einer Sanitärarmatur an eine Hausinstallation, wobei der Anschlussblock ein Grundelement mit Anschlüssen zum Verbinden mit den Leitungen der Hausinstallation und ein Anschlusselement mit Anschlüssen für die Sanitärarmatur umfasst. Das Grundelement und das Anschlusselement stehen sich an einer gemeinsamen Trennfläche gegenüber, welche die Form einer Teilkugel oder eines Teilkreiszylinders aufweist.

Die Offenlegungsschriften DE 10 2012 201 699 A1 und EP 1 006 241 A1 offenbaren sanitäre Anschlusseinrichtungen, die mit einem Schalldämpferelement ausgerüstet sind.

Die Offenlegungsschrift DE 196 22 368 A1 offenbart eine Anordnung eines Satzes von Mischarmaturen mit einem für alle Mischarmaturen identischen Universalgehäuse und mit unterschiedlichen Kartuschenadaptern, wobei der jeweilige Kartuschenadapter mittels Schrauben am Universalgehäuse befestigt wird.

Weitere herkömmliche sanitäre Anschluss-/Verbindungseinrichtungen sind in den Offenlegungsschriften DE 10 2010 030 661 A1 und DE 10 2007 030 153 A1 sowie der Gebrauchsmusterschrift DE 20 2016 100 225 U1 offenbart.

Der Erfindung liegt als technisches Problem die Bereitstellung eines Anschlusssockels der eingangs genannten Art zugrunde, mit dem eine Sanitärarmatur mit ihrer bodenstehenden Armatursäule besonders vorteilhaft an eine Wasserversorgung, wie einen gebäudeseitigen Kaltwasser- und/oder Warmwasseranschluss, angeschlossen werden kann.

Die Erfindung löst dieses Problem durch die Bereitstellung eines Anschlusssockels mit den Merkmalen des Anspruchs 1.

Erfindungsgemäß ist das Sockeloberteil zwischen der Betriebsstellung, in welcher der Oberteil-Fluidkanal über seinen Oberteil-Einlass mit dem Bodenkörper-Fluidkanal über dessen Bodenkörper-Auslass in Fluidverbindung steht, und einer Absperrstellung verdrehbar am Sockelbodenkörper angebracht, wobei in dieser Absperrstellung die Fluidverbindung des Oberteil-Einlasses mit dem Bodenkörper-Auslass und somit die Fluidverbindung des Oberteil-Fluidkanals mit dem Bodenkörper-Fluidkanal abgesperrt ist. In der Absperrstellung des Sockeloberteils können folglich Wartungs- oder Montagearbeiten am Sockeloberteil und/oder an der daran bodenstehend montierten Armatursäule vorgenommen werden, ohne dass es dazu erforderlich ist, die Fluidzufuhr zum Sockelbodenkörper z.B. an einer gebäudeseitigen Absperrung einer zugehörigen Wasserversorgung abzusperren.

Gemäß einem Aspekt der Erfindung ist die oberseitige Anschlussfläche des Sockelbodenkörpers, an welcher die Armatursäule lösbar angebracht werden kann, kugelkalottenförmig ausgebildet. In entsprechenden Realisierungen ist diese Anschlussfläche halbkugelförmig oder zumindest bereichsweise kugelkalottenförmig ausgebildet, was z.B. den Fall umfasst, dass sie ein gekapptes, oberseitig ebenes Kugelsegment bildet. Dies ermöglicht in Verbindung mit einer korrespondierend kugelkalottenförmigen Montagefläche an der Armatursäule eine entsprechende Kippbeweglichkeit der Armatursäule gegenüber dem Anschlusssockel, um die Armatursäule vertikal ausrichten zu können, bevor sie endgültig am Sockelbodenkörper festgelegt wird. Diese kugelkalottenförmige Ankopplung der Armatursäule an den Anschlusssockel lässt sich ohne größeren Aufwand mit der geforderten Dichtigkeit realisieren.

Gemäß einem weiteren Aspekt der Erfindung weisen der Sockelbodenkörper und das Sockeloberteil korrespondierend kegelstumpfförmige Anlageflächen auf, an denen sich der Bodenkörper-Auslass und der Oberteil-Einlass befinden. Die Längsachse dieser Kegelstumpfform kann in diesem Fall als Drehachse für das Verdrehen des Sockeloberteils gegenüber dem Sockelbodenkörper zwischen der Betriebsstellung und der Absperrstellung fungieren, um den Oberteil-Einlass wahlweise mit dem Bodenkörper-Auslass in Fluidverbindung zu bringen bzw. diese Fluidverbindung aufzuheben, indem der Oberteil-Einlass in den Bereich des Bodenkörper-Auslasses gedreht bzw. aus diesem herausgedreht wird.

Alle genannten Aspekte tragen je für sich und in Kombinationen dazu bei, dass erfindungsgemäß eine Sanitärarmatur mit ihrer bodenstehenden Armatursäule besonders vorteilhaft an eine Wasserversorgung angeschlossen werden kann, bei der es sich insbesondere um einen gebäudeseitigen Kaltwasser- und/oder Warmwasseranschluss handeln kann. So ist in entsprechenden Ausführungsformen der Erfindung das Schalldämpferelement vorteilhaft in den Sockelbodenkörper integriert. Analog ist in entsprechenden Ausführungsformen der Erfindung das Rückflussverhindererelement vorteilhaft in das Sockeloberteil integriert. In entsprechenden Ausführungsformen der Erfindung kann das Rückflussverhindererelement dadurch herausgenommen bzw. ausgetauscht werden, dass das Sockeloberteil in seine Absperrstellung verdreht wird, wonach die bodenstehende Armatursäule vom Sockeloberteil demontiert und anschließend das Rückflussverhindererelement über den Oberteil-Auslass aus dem Sockeloberteil oder, wenn es in der Armatursäule angeordnet ist, aus dieser herausgenommen werden kann. Dann kann ein neues Rückflussverhindererelement in den Oberteil-Fluidkanal bzw. in die Armatursäule eingesetzt und die Armatursäule wieder am Sockeloberteil befestigt werden. Abschließend wird das Sockeloberteil wieder in seine Betriebsstellung zurück verdreht, um die Fluidverbindung vom Sockelbodenkörper zum Sockeloberteil und damit zur Armatursäule wieder herzustellen.

In Weiterbildung der Erfindung ist im Bodenkörper-Fluidkanal des Sockelbodenkörpers des Anschlusssockels ein Schalldämpferelement angeordnet, das über den Bodenkörper-Auslass einsetzbar und herausnehmbar ist, d.h. das Schalldämpferelement kann durch den Bodenkörper-Auslass hindurch in diesen Bodenkörper-Fluidkanal eingesetzt und aus diesem bei Bedarf auch wieder herausgenommen werden, z.B. zu Wartungszwecken bzw. zum Ersetzen eines defekten Schalldämpferelements.

In Weiterbildung der Erfindung ist das Schalldämpferelement in einem austrittsseitigen Abschnitt des Bodenkörper-Fluidkanals angeordnet, wobei dieser austrittsseitige Abschnitt unter einem Winkel kleiner als 70° schräg zu einem eintrittsseitigen Abschnitt des Bodenkörper-Fluidkanals verläuft, wobei dieser eintrittsseitige Abschnitt bodenebenenparallel ist, d.h. parallel zu einer horizontalen und damit zur vertikalen Armatursäule senkrechten Bodenebene. Dies stellt eine vorteilhafte Integration des Schalldämpferelements in den Sockelbodenkörper dar.

In Weiterbildung der Erfindung ist im Oberteil-Fluidkanal des Sockeloberteils des Anschlusssockels ein über den Oberteil-Auslass einsetzbares und herausnehmbares Rückflussverhindererelement angeordnet, d.h. das Rückflussverhinderer-element kann durch den Oberteil-Auslass hindurch in diesen Oberteil-Fluidkanal eingesetzt und aus diesem bei Bedarf wieder herausgenommen werden, z.B. zu Wartungszwecken bzw. zum Ersetzen eines defekten Rückflussverhindererelements.

In Weiterbildung der Erfindung ist das Sockeloberteil mittels einer Bajonettverbindung lösbar am Sockelbodenkörper angebracht, wobei das Sockeloberteil durch die Bajonettverbindung gegenüber dem Sockelbodenkörper zwischen der Betriebsstellung und einer Demontagestellung drehbar ist. Die Demontagestellung hat hierbei einen größeren Drehwinkelabstand von der Betriebsstellung als die Absperrstellung, und die Absperrstellung ist als eine aufhebbare Zwischenstellung ausgebildet. Dies hat den vorteilhaften Effekt, dass das Sockeloberteil ausgehend von der Betriebsstellung zunächst in die Absperrstellung verdreht wird, die der Benutzer als aufhebbare Zwischenstellung wahrnimmt, wobei hierunter eine Stellung zu verstehen ist, die sich durch eine plötzliche Änderung des Betätigungswiderstands definiert, z.B. als Raststufe oder Anschlag, und durch eine geeignete Maßnahme überfahren werden kann, so dass dann das Sockeloberteil bis zur Demontagestellung weitergedreht werden kann. Eine solche Maßnahme kann beispielsweise mittels eines zu lösenden Raststifts oder dergleichen oder einer Rastung realisiert sein, die mit einer erhöhten Drehkraft ausgerastet werden kann. Dadurch ist sichergestellt, dass das Sockeloberteil erst dann vom Sockelbodenkörper demontiert werden kann, wenn zuvor bereits die Fluidverbindung vom Sockelbodenkörper zum Sockeloberteil abgesperrt wurde.

In Weiterbildung der Erfindung weist der Sockelbodenkörper zwei getrennte Bodenkörper-Fluidkanäle mit je einem Bodenkörper-Einlass und je einem Bodenkörper-Auslass auf, und analog weist das Sockeloberteil zwei getrennte Oberteil-Fluidkanäle mit je einem Oberteil-Einlass und je einem Oberteil-Auslass auf. Diese Weiterbildung eignet sich insbesondere zum Anschluss von sanitären Mischerarmaturen mit getrennter Kaltwasser- und Warmwasserzufuhr über je einen der genannten Fluidkanäle im Sockelbodenkörper bzw. im Sockeloberteil.

In weiterer Ausgestaltung ist in beiden Bodenkörper-Fluidkanälen je ein über den zugehörigen Bodenkörper-Auslass einsetzbares und herausnehmbares Schalldämpferelement angeordnet. Zusätzlich oder alternativ ist in weiterer Ausgestaltung in beiden Oberteil-Fluidkanälen je ein über den zugehörigen Oberteil-Auslass einsetzbares und herausnehmbares Rückflussverhindererelement angeordnet. Zusätzlich oder alternativ ist in weiterer Ausgestaltung in der Absperrstellung des Sockeloberteils die Fluidverbindung jedes der beiden Oberteil-Einlässe mit dem zugeordneten Bodenkörper-Auslass abgesperrt. Alle diese Ausgestaltungen sind speziell auch für sanitäre Mischerarmaturen mit getrennter Kaltwasser- und Warmwasserzufuhr vorteilhaft. Die oben für den Bodenkörper-Fluidkanal bzw. den Oberteil-Fluidkanal und die Absperrfunktion genannten vorteilhaften Eigenschaften gelten in diesem Fall für beide Bodenkörper-Fluidkanäle bzw. Oberteil-Fluidkanäle.

Vorteilhafte Ausführungsformen der Erfindung sind in den Zeichnungen dargestellt und werden nachfolgend beschrieben. Hierbei zeigen:
- Fig. 1: eine Längsschnittansicht eines Anschlusssockels mit montierter bodenstehender Armatursäule in einer Sockelbetriebsstellung,
- Fig. 2: eine Längsschnittansicht des Anschlusssockels von Fig. 1 in einer anderen Schnittebene,
- Fig. 3: eine Querschnittansicht längs eine Linie III-III von Fig. 1,
- Fig. 4: eine Längsschnittansicht entsprechend Fig. 1 mit dem Anschlusssockel in einer Sockelabsperrstellung,
- Fig. 5: eine Querschnittansicht längs einer Linie V-V von Fig. 4,
- Fig. 6: eine Längsschnittansicht des Anschlusssockels der Fig. 1 bis 5 in noch einer anderen Schnittebene,
- Fig. 7: eine Längsschnittansicht entsprechend Fig. 1 für eine Sockelvariante mit modifizierter Platzierung von Rückflussverhindererelementen und
- Fig. 8: eine Längsschnittansicht entsprechend den Fig. 1 und 7 mit dem gegenüber modifizierter Platzierung von Rückflussverhindererelementen.

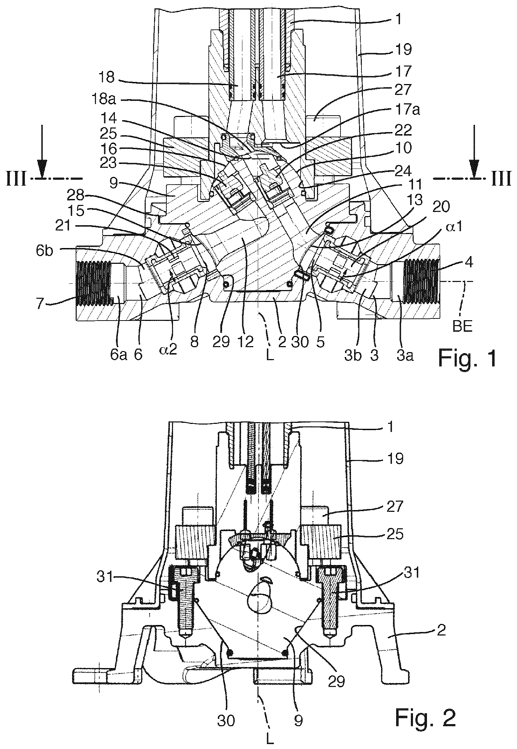

Der in den Fig. 1 bis 6 gezeigte Anschlusssockel eignet sich z.B. zum Anschließen einer freistehenden Mischerarmatur für eine Badewanne oder eine Duschsäulenanordnung oder dergleichen mit einer am Anschlusssockel lösbar angebrachten Armatursäule 1. Der Anschlusssockel umfasst einen Sockelbodenkörper 2, der einen ersten Bodenkörper-Fluidkanal 3 mit einem ersten Bodenkörper-Einlass 4 und einem ersten Bodenkörper-Auslass 5 sowie einen zweiten Bodenkörper-Fluidkanal 6 mit einem zweiten Bodenkörper-Einlass 7 und einem zweiten Bodenkörper-Auslass 8 aufweist. Außerdem beinhaltet der Anschlusssockel ein am Sockelbodenkörper 2 lösbar angebrachtes Sockeloberteil 9 mit einer oberseitigen Armatursäulen-Anschlussfläche 10 sowie einem ersten Oberteil-Fluidkanal 11 und einem zweiten Oberteil-Fluidkanal 12. Der erste Oberteil-Fluidkanal 11 weist einen ersten Oberteil-Einlass 13 und einen ersten, an der Armatursäulen-Anschlussfläche 10 ausmündenden Oberteil-Auslass 14 auf. Ebenso weist der zweite Oberteil-Fluidkanal 12 einen zweiten Oberteil-Einlass 15 und einen zweiten, an der Armatursäulen-Anschlussfläche ausmündenden Oberteil-Auslass 16 auf.

Die beiden Bodenkörper-Fluidkanäle 3, 6 sind voneinander fluidgetrennt im Sockelbodenkörper 2 ausgebildet, und ebenso sind die beiden Oberteil-Fluidkanäle 11, 12 fluidgetrennt im Sockeloberteil 9 ausgebildet. In einer in Fig. 1 dargestellten Betriebsstellung des Sockeloberteils 9 steht der erste Oberteil-Einlass 13 in Fluidverbindung mit dem ersten Bodenkörper-Auslass 5, und der zweite Oberteil-Einlass 15 steht in Fluidverbindung mit dem zweiten Bodenkörper-Auslass 8. Dadurch steht der erste Oberteil-Fluidkanal 11 in Fluidverbindung mit dem ersten Bodenkörper-Fluidkanal 3, und der zweite Oberteil-Fluidkanal 12 steht in Fluidverbindung mit dem zweiten Bodenkörper-Fluidkanal 6. Die beiden Bodenkörper-Einlässe 4, 7 können insbesondere an einen Kaltwasseranschluss bzw. einen Warmwasseranschluss einer gebäudeseitigen Hauswasserversorgung bzw. Sanitärinstallation angeschlossen werden, so dass der Armatursäule 1 über die beiden fluidgetrennten Anschlusssockelkanäle, die jeweils aus dem betreffenden Bodenkörper-Fluidkanal 3, 6 und dem damit verbundenen Oberteil-Fluidkanal 11, 12 bestehen, getrennt Kaltwasser und Warmwasser zugeführt werden kann. Entsprechend weist die Armatursäule 1 zwei getrennte Leitungen bzw. Wasserführungen 17, 18 mit zugehörigen Einlässen 17a, 18a auf, die mit dem ersten Oberteil-Auslass 14 bzw. dem zweiten Oberteil-Auslass 16 in Fluidverbindung stehen. Die Wasserführungen 17, 18 führen in üblicher, nicht gezeigter Weise zu einem Kopfteil der Armatursäule, in welchem sich eine zugehörige Mischereinheit bzw. eine Armatureneinheit zur Steuerung der Wassermenge und des Kaltwasser/Warmwasser-Mischungsverhältnisses befindet.

Der Anschlusssockel wird in üblicher Weise unterhalb eines Fußbodenniveaus an die sanitäre Hausinstallation angeschlossen und ist vorzugsweise von einer Abdeckkappe 19 abgedeckt, die sich in ebenfalls üblicher und hier nicht gezeigter Weise bis zu einem Fußbodenniveau, wie einem Badezimmerfliesenniveau oder Duschraumbodenniveau, oder geringfügig über dieses hinaus erstreckt und optional von einer Deckrosette abgedeckt wird, welche die sich nach oben fortsetzende Armatursäule 1 umgibt.

Wie weiter aus Fig. 1 ersichtlich, ist in beiden Bodenkörper-Fluidkanälen 3, 6 je ein Schalldämpferelement 20, 21 angeordnet, das über den zugehörigen ersten bzw. zweiten Bodenkörper-Auslass 13, 15 in den betreffenden Bodenkörper-Fluidkanal 3, 6 eingesetzt und wieder aus diesem herausgenommen werden kann, wenn das Sockeloberteil 9 vom Sockelbodenkörper 2 abgenommen ist. Für die Schalldämpferelemente 20, 21 sind solche üblicher Bauart verwendbar. Speziell sind beim Anschlusssockel gemäß Fig. 1 die Schalldämpferelemente 20, 21 in einem austrittsseitigen Abschnitt 3b, 6b des betreffenden Bodenkörper-Fluidkanals 3, 6 angeordnet, wobei der austrittsseitige Abschnitt 3b, 6b jeweils unter einem Winkel α1, α2 kleiner als 70° schräg zu einem bodenebenen parallelen eintrittsseitigen Abschnitt 3a, 6a des jeweiligen Bodenkörper-Fluidkanals 3, 6 verläuft. Vorzugsweise ist dieser Schrägwinkel α1, α2 kleiner als 45°, und im gezeigten Beispiel liegt er im Bereich zwischen 25° und 30°.

In den beiden Oberteil-Fluidkanälen 11, 12 ist jeweils ein Rückflussverhindererelement 22, 23 herkömmlicher Bauart angeordnet, das über den zugehörigen ersten bzw. zweiten Oberteil-Auslass 14, 16 in den betreffenden Oberteil-Fluidkanal 11, 12 eingesetzt und wieder herausgenommen werden kann, wenn die Armatursäule 1 vom Sockeloberteil 9 demontiert ist.

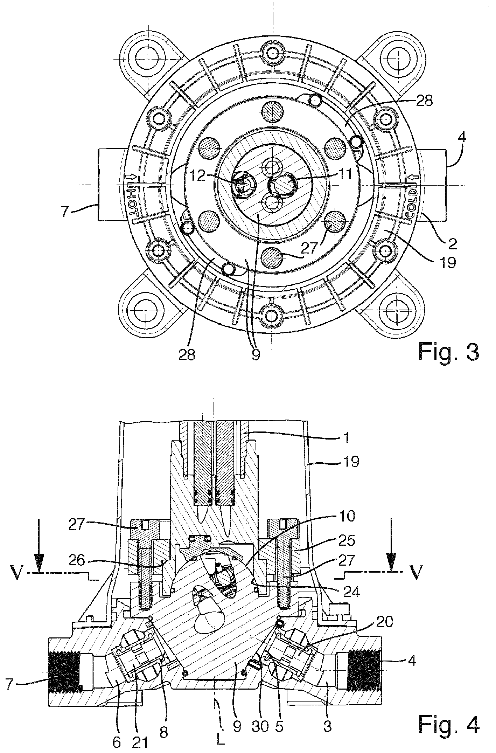

Die oberseitige Armatursäulen-Anschlussfläche 10 des Sockeloberteils 9 kann, wie gezeigt, vorteilhaft kugelkalottenförmig ausgebildet sein, um im entsprechenden Maß ein Verkippen der Armatursäule 1 mit ihrer Längsachse relativ zu einer Längsachse L des Sockeloberteils 9 und damit ein vertikales Ausrichten der Armatursäule 1 zu ermöglichen. Dazu weist die Armatursäule 1 an ihrer Unterseite eine korrespondierend kugelkalottenförmige Anschlussfläche 24 auf. Im ausgerichteten Zustand kann dann die Armatursäule 1 mittels eines Fixierrings 25, der auf einen Ringabsatz 26 der Armatursäule 1 wirkt, und Schraubverbindungen 27 am Sockeloberteil 9 fixiert werden, wie insbesondere aus Fig. 4 ersichtlich.

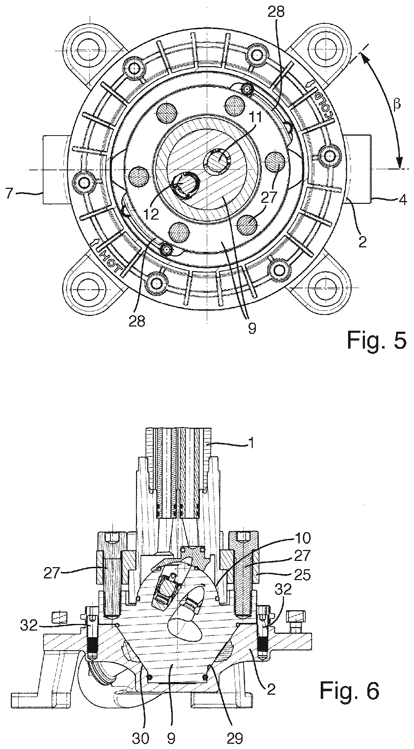

Das Sockeloberteil 9 ist im gezeigten Beispiel der Fig. 1 mittels einer Bajonettverbindung 28 zwischen der in Fig. 1 gezeigten Betriebsstellung und einer Absperrstellung verdrehbar am Sockelbodenkörper 2 angebracht. In der Absperrstellung ist die Fluidverbindung des jeweiligen Oberteil-Einlasses 13, 15 mit dem korrespondierenden Bodenkörper-Auslass 5, 8 abgesperrt. Die Fig. 4 und 5 zeigen den Anschlusssockel in der Absperrstellung, während die Fig. 1 bis 3 den Anschlusssockel in der Betriebsstellung zeigen. Im gezeigten Ausführungsbeispiel weisen dazu der Sockelbodenkörper 2 und das Sockeloberteil 9 korrespondierend kegelstumpfförmige Anlageflächen 29, 30 auf, an denen sich die Bodenkörper-Auslässe 5, 8 bzw. die Oberteil-Einlässe 13, 15 befinden. Vorzugsweise ist das Sockeloberteil 9 in der Betriebsstellung dadurch gesichert, dass es zusätzlich z.B. durch Schraubverbindungen 31, wie in Fig. 2 gezeigt, lösbar am Sockelbodenkörper 2 fixiert ist. Diese Fixierung wird gelöst, wenn das Sockeloberteil 9 gegenüber dem Sockelbodenkörper 2 verdreht werden soll.

Die Verdrehung des Sockeloberteils 9 gegenüber dem Sockelbodenkörper 2 von der Betriebsstellung in die Absperrstellung und zurück erfolgt über einen Verdrehwinkelbereich, der ausreicht, die Oberteil-Einlässe 13, 15 vollständig aus dem Bereich der Bodenkörper-Auslässe 5, 8 wegzudrehen. Die Verdrehung des Sockeloberteils 9 erfolgt um seine Längsachse L als Drehachse, wobei die Armatursäule 1 mitgedreht werden kann, wenn sie am Sockeloberteil 9 angebracht ist. Der Verdrehwinkelbereich zwischen Betriebsstellung und Absperrstellung ist im gezeigten Beispiel aus einem Vergleich der Fig. 3 und 5 erkennbar und beträgt, wie daraus ersichtlich, ca. 35°, in Fig. 5 durch einen Winkel β repräsentiert.

Da somit in der Absperrstellung des Sockeloberteils 9 seine Fluidkanäle 11, 12 gegenüber den an die Wasserversorgung angeschlossenen Bodenkörper-Fluidkanälen 3, 6 abgesperrt sind, ist die Fluidzufuhr zum Sockeloberteil 9 und damit auch zur Armatursäule 1 dann unterbrochen und es können Reparatur- oder Wartungsarbeiten an der Armatursäule 1 bzw. am Sockeloberteil 9 vorgenommen werden, ohne eine anderweitige Wasserabsperrung z.B. an einem vorgelagerten Absperrhahn der gebäudeseitigen Sanitärinstallation vornehmen zu müssen. Insbesondere können in der Absperrstellung des Sockeloberteils 9 die Armatursäule 1 vom Sockeloberteil 9 durch Lösen der Fixierung 27 abgenommen und danach die beiden oder eines der beiden Rückflussverhindererelemente 22, 23 aus dem Sockeloberteil 9 herausgenommen und ggf. durch neue Rückflussverhindererelemente ersetzt werden.

Für eine Reparatur bzw. Wartung der Schalldämpferelemente 20, 21 wird das Sockeloberteil 9 vom Sockelbodenkörper 2 demontiert, wonach die Schalldämpferelemente 20, 21 über die betreffenden Bodenkörper-Auslässe 5, 8 zugänglich sind und repariert bzw. ausgetauscht werden können. Dazu ist das Sockeloberteil 9 durch die Bajonettverbindung 28 gegenüber dem Sockelbodenkörper 2 zwischen der Betriebsstellung gemäß den Fig. 1 bis 3 und einer Demontagestellung um seine Längsachse L drehbar, wobei die Demontagestellung einen größeren Drehwinkelabstand von der Betriebsstellung hat als die Absperrstellung und wobei die Absperrstellung als eine überwindbare Zwischenstellung, z.B. in Form einer überfahrbaren Rastung oder eines lösbaren Anschlags ausgebildet ist. Im gezeigten Beispiel der Fig. 1 bis 6 ist die Absperrstellung als lösbarer Anschlag durch einschraubbare Anschlagstifte 32 definiert, wie aus Fig. 6 zu erkennen sind, wobei die Anschlagstifte 32 vom Sockeloberteil 9 aus in den Sockelbodenkörper 2 einschraubbar sind und als lösbarer Anschlag für die Drehbewegung durch die Bajonettverbindung 28 in der Absperrstellung fungieren. Nach Herausschrauben der Anschlagstifte 32 kann folglich das Sockeloberteil 9 gegenüber dem Sockelbodenkörper 2 über die Absperrstellung hinaus in die Demontagestellung gedreht werden. In der Demontagestellung ist die Bajonettverbindung 28 gelöst, so dass das Sockeloberteil 9 vom Sockelbodenkörper 2 abgenommen werden kann.

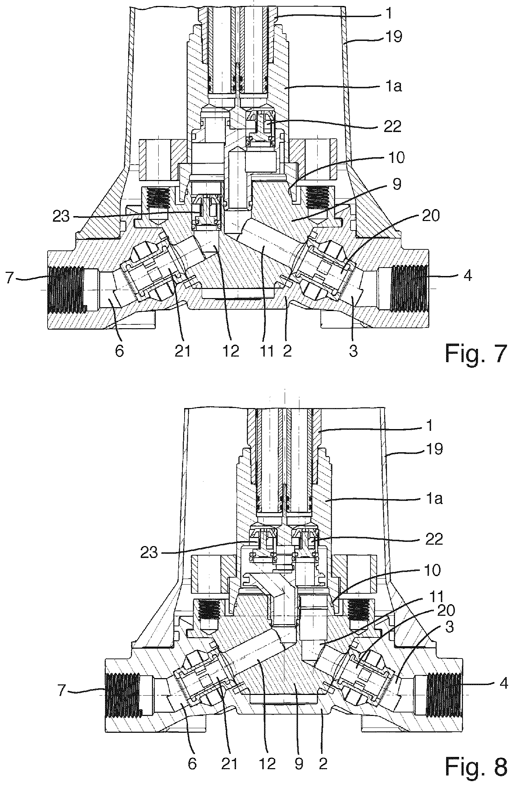

Die Fig. 7 und 8 veranschaulichen zwei Varianten des Ausführungsbeispiels der Fig. 1 bis 6, wobei zum leichteren Verständnis für identische und funktionell äquivalente Elemente gleiche Bezugszeichen verwendet sind und insoweit auf die obigen Erläuterungen zu den Fig. 1 bis 6 verwiesen werden kann, so dass nachfolgend nur auf die vorhandenen Unterschiede näher eingegangen wird.

Beim Ausführungsbeispiel von Fig. 7 ist das Rückflussverhindererelement 22 in einem diesbezüglich modifizierten unteren Bereich 1a der Armatursäule 1 angeordnet. Des Weiteren ist die Kanalführung der beiden Oberteil-Fluidkanäle 11, 12 etwas modifiziert, wie aus Fig. 7 im Vergleich mit Fig. 1 ersichtlich. Dazu passend ist die kugelkalottenförmige Armatursäulen-Anschlussfläche 10 des Sockeloberteils 9 von einem gekappten, oberseitig ebenen Kugelsegment statt wie im Beispiel von Fig. 1 von einer Halbkugelform gebildet.

Im Ausführungsbeispiel von Fig. 8 sind beide Rückflussverhindererelemente 22, 23 im unteren Bereich 1a der Armatursäule 1 statt wie im Beispiel der Fig. 1 bis 6 im Sockeloberteil 9 angeordnet. Wiederum sind die beiden Oberteil-Fluidkanäle 11, 12 in ihrem Verlauf gegenüber demjenigen in den Ausführungsbeispielen von Fig. 7 bzw. der Fig. 1 bis 6 modifiziert, wie aus einem Vergleich der Fig. 8 mit Fig. 7 bzw. Fig. 1 zu erkennen.

In nicht gezeigten, weiteren Ausführungsbeispielen der Erfindung ist nur in einem der beiden Bodenkörper-Fluidkanäle ein Schalldämpferelement angeordnet, oder es befinden sich dort keine Schalldämpferelemente. Des Weiteren umfasst die Erfindung nicht gezeigte Ausführungsbeispiele, bei denen die Verdrehbarkeit des Sockeloberteils gegenüber dem Sockelbodenkörper nicht durch eine Bajonettverbindung, sondern durch eine andere herkömmliche Drehverbindung realisiert ist, z.B. unter Verwendung einer geeigneten Drehkulissenführung. Zudem umfasst die Erfindung Ausführungsbeispiele, bei denen das Sockeloberteil nur zwischen der Betriebsstellung und der Absperrstellung verdrehbar am Sockelbodenkörper angebracht ist, ohne in eine Demontagestellung weitergedreht zu werden, sowie Ausführungsbeispiele, bei denen das Sockeloberteil starr am Sockelbodenkörper lösbar angebracht ist, ohne gegenüber diesem verdreht werden zu können.

Wie die gezeigten und oben erläuterten Ausführungsbeispiele deutlich machen, stellt die Erfindung einen Anschlusssockel zur Verfügung, mit dem Sanitärarmaturen mit bodenstehender Armatursäule in einer sehr vorteilhaften Weise an eine zugehörige Wasserversorgung angeschlossen werden können.

## Patentansprüche

1. Anschlusssockel für eine Sanitärarmatur mit bodenstehender Armatursäule, mit
- einem Sockelbodenkörper (2), der einen Bodenkörper-Fluidkanal (3) mit einem Bodenkörper-Einlass (4) und einem Bodenkörper-Auslass (5) aufweist, und
- einem am Sockelbodenkörper lösbar angebrachten Sockeloberteil (9) mit einer oberseitigen Armatursäulen-Anschlussfläche (10) und einem Oberteil-Fluidkanal (11), der einen in einer Betriebsstellung des Sockeloberteils mit dem Bodenkörper-Auslass in Fluidverbindung stehenden Oberteil-Einlass (13) und einen an der Armatursäulen-Anschlussfläche ausmündenden Oberteil-Auslass (14) aufweist, wobei
- das Sockeloberteil (9) zwischen der Betriebsstellung und einer Absperrstellung verdrehbar am Sockelbodenkörper (2) angebracht ist, wobei in der Absperrstellung die Fluidverbindung des Oberteil-Einlasses (13) mit dem Bodenkörper-Auslass (5) abgesperrt ist, **dadurch gekennzeichnet, dass** and
- die oberseitige Armatursäulen-Anschlussfläche kugelkalottenförmig ist und/oder der Sockelbodenkörper und das Sockeloberteil korrespondierend kegelstumpfförmige Anlageflächen (29, 30) aufweisen, an denen sich der Bodenkörper-Auslass und der Oberteil-Einlass befinden.

2. Anschlusssockel nach Anspruch 1, weiter **dadurch gekennzeichnet, dass** im Bodenkörper-Fluidkanal (3) ein über den Bodenkörper-Auslass (5) einsetzbares und herausnehmbares Schalldämpferelement (20) angeordnet ist.

3. Anschlusssockel nach Anspruch 1 oder 2, weiter **dadurch gekennzeichnet, dass** das Schalldämpferelement in einem austrittsseitigem Abschnitt (3b) des Bodenkörper-Fluidkanals angeordnet ist, wobei der austrittseitige Abschnitt unter einem Winkel kleiner als 70° schräg zu einem bodenebenenparallelen eintrittsseitigen Abschnitt (3a) des Bodenkörper-Fluidkanals verläuft.

4. Anschlusssockel nach einem der Ansprüche 1 bis 3, weiter **dadurch gekennzeichnet, dass** im Oberteil-Fluidkanal (11) ein über den Oberteil-Auslass (14) einsetzbares und herausnehmbares Rückflussverhindererelement (22) angeordnet ist.

5. Anschlusssockel nach einem der Ansprüche 1 bis 4, weiter **dadurch gekennzeichnet, dass** das Sockeloberteil mittels einer Bajonettverbindung (28) lösbar am Sockelbodenkörper angebracht ist, wobei das Sockeloberteil durch die Bajonettverbindung gegenüber dem Sockelbodenkörper zwischen der Betriebsstellung und einer Demontagestellung drehbar ist, wobei die Demontagestellung einen größeren Drehwinkelabstand von der Betriebsstellung hat als die Absperrstellung und wobei die Absperrstellung als eine aufhebbare Zwischenstellung ausgebildet ist.

6. Anschlusssockel nach einem der Ansprüche 1 bis 5, weiter **dadurch gekennzeichnet, dass**
- der Sockelbodenkörper zwei getrennte Bodenkörper-Fluidkanäle (3, 6) mit je einem Bodenkörper-Einlass (4, 7) und je einem Bodenkörper-Auslass (5, 8) aufweist und
- das Sockeloberteil zwei getrennte Oberteil-Fluidkanäle (11, 12) mit je einem Oberteil-Einlass (13, 15) und je einem Oberteil-Auslass (14, 16) aufweist.

7. Anschlusssockel nach Anspruch 6, weiter **dadurch gekennzeichnet, dass**
- in beiden Bodenkörper-Fluidkanälen je ein über den zugehörigen Bodenkörper-Auslass einsetzbares und herausnehmbares Schalldämpferelement (20, 21) angeordnet ist und/oder
- in beiden Oberteil-Fluidkanälen je ein über den zugehörigen Oberteil-Auslass einsetzbares und herausnehmbares Rückflussverhindererelement (22, 23) angeordnet ist und/oder
- in der Absperrstellung des Sockeloberteils die Fluidverbindung jedes der beiden Oberteil-Einlässe mit dem zugeordneten Bodenkörper-Auslass abgesperrt ist.

## Claims

1. Connection socket for a sanitary fitting with a floor-standing faucet column, comprising
- a socket bottom body (2), including a bottom body fluid channel (3) with a bottom body inlet (4) and a bottom body outlet (5), and
- a socket top (9) removably attached to the socket bottom body having a topsided faucet column connection surface (10) and a top fluid channel (11), which channel has a top inlet (13) connected in fluid communication with the bottom body outlet, when the socket top is in an operating position, and a top outlet (14) discharging on the faucet column connection surface,
- wherein the socket top (9) is attached on the socket bottom body (2) to be turnable between the operating position and a blocking position, wherein in the blocking position the fluid communication of the top inlet (13) with the bottom body outlet (5) is blocked,
**characterized in that**
- the faucet column connection surface has a ball scraper shape and/or the socket bottom body and the socket top have corresponding frustoconical abutment surfaces (29, 30), whereon the bottom body outlet and the top inlet are located.

2. Connection socket according to claim 1, further **characterized in that** a sound absorber element (20) is disposed in the bottom body fluid channel (3) and insertable and extractable via the bottom body outlet (5).

3. Connection socket according to claim 1 or 2, further **characterized in that** the sound absorber element is disposed in an output-sided section (3b) of the bottom body fluid channel, wherein the output-sided section extends in an angle of less than 70° inclined in relation to a bottom plane parallel input-sided section (3a) of the bottom body fluid channel.

4. Connection socket according to any one of claims 1 to 3, further **characterized in that** a backflow preventer element (22) is disposed in the top fluid channel (11) and insertable and extractable via the top outlet (14).

5. Connection socket according to any one of claims 1 to 4, further **characterized in that** the socket top is removably attached to the socket bottom body by means of a bayonet connection (28), wherein the socket top is turnable in relation to the socket bottom body due to the bayonet connection between the operating position and a disassembling position, wherein the disassembling position has a greater turning angle distance to the operating position than the blocking position, and wherein the blocking position is a reversible intermediate position.

6. Connection socket according to any one of claims 1 to 5, further **characterized in that**
- the socket bottom body includes two separate bottom body fluid channels (3, 6) each with a respective bottom body inlet (4, 7) and a respective bottom body outlet (5, 8), and
- the socket top includes two separate top fluid channels (11, 12) each with a respective top inlet (13, 15) and a respective top outlet (14, 16).

7. Connection socket according to claim 6, further **characterized in that**
- in each of the two bottom body fluid channels a respective sound absorber element (20, 21) is disposed and insertable and extractable via the associated bottom body outlet, and/or
- in each of the two top fluid channels a backflow preventer element (22, 23) is disposed and insertable and extractable via the associated top outlet, and/or
- in the blocking position of the socket top the fluid communication of each of the two top inlets with the assigned bottom body outlet is blocked.

## Revendications

1. Socle de raccordement pour une robinetterie sanitaire comportant une colonne de robinetterie reposant au sol, comportant
- un corps de fond de socle (2) qui présente un canal à fluide de corps de fond (3) ayant une entrée de corps de fond (4) et une sortie de corps de fond (5), et
- une partie supérieure de socle (9) montée de manière amovible au corps de fond de socle et ayant une surface supérieure (10) de raccordement à la colonne de robinetterie et un canal à fluide de partie supérieure (11), qui présente une entrée de partie supérieure (13) en communication fluidique avec la sortie du corps de fond dans une position de fonctionnement de la partie supérieure du socle, et une sortie de partie supérieure (14) qui débouche vers l'extérieur au niveau de la surface de raccordement à la colonne de robinetterie,
dans lequel
- la partie supérieure de socle (9) est montée sur le corps de fond de socle (2) de manière rotative entre la position de fonctionnement et une position de coupure, et dans la position de coupure la communication fluidique de l'entrée de partie supérieure (13) avec la sortie de corps de fond (5) est coupée,
**caractérisé en ce que**
- la surface supérieure de raccordement à la colonne de robinetterie est en forme de calotte sphérique, et/ou le corps de fond de socle et la partie supérieure de socle présentent des surfaces d'appui tronconiques correspondantes (29, 30) au niveau desquelles se trouvent la sortie de corps de fond et l'entrée de partie supérieure.

2. Socle de raccordement selon la revendication 1,
**caractérisé en outre en ce qu'**un élément silencieux (20), qui peut être inséré et retiré par la sortie de corps de fond (5), est disposé dans le canal à fluide de corps de fond (3).

3. Socle de raccordement selon la revendication 1 ou 2,
**caractérisé en outre en ce que** l'élément silencieux est disposé dans une portion (3b) côté sortie du canal à fluide du corps de fond, la portion côté sortie s'étendant en oblique selon un angle inférieur à 70° par rapport à une portion (3a) côté entrée, parallèle au plan du sol, du canal à fluide du corps de fond.

4. Socle de raccordement selon l'une des revendications 1 à 3,
**caractérisé en outre en ce qu'**un élément anti-retour (22) qui peut être inséré et retiré par la sortie de partie supérieure (4) est disposé dans le canal à fluide de partie supérieure (11).

5. Socle de raccordement selon l'une des revendications 1 à 4,
**caractérisé en outre en ce que** la partie supérieure de socle est montée au corps de fond de socle de manière amovible au moyen d'une liaison à baïonnette (28), la partie supérieure de socle pouvant être tournée par la liaison à baïonnette par rapport au corps de fond de socle entre la position de fonctionnement et une position de démontage, la position de démontage présentant une distance angulaire de rotation par rapport à la position de fonctionnement qui est plus grande que celle de la position de coupure, et la position de coupure étant conçue comme une position intermédiaire supprimable.

6. Socle de raccordement selon l'une des revendications 1 à 5,
**caractérisé en outre en ce que**
- le corps de fond de socle comprend deux canaux à fluide de corps de fond (3, 6) séparés ayant chacun une entrée de corps de fond (4, 7) et une sortie de corps de fond (5, 8), et
- la partie supérieure de socle comporte deux canaux à fluide de partie supérieure (11, 12) séparés ayant chacun une entrée de partie supérieure (13, 15) et une sortie de partie supérieure (14, 16).

7. Socle de raccordement selon la revendication 6,
**caractérisé en outre en ce que**
- un élément silencieux (20, 21) qui peut être inséré et retiré par la sortie de corps de fond associée est disposé dans chacun des deux canaux à fluide de corps de fond, et/ou
- un élément anti-retour (22, 23) qui peut être inséré et retiré par la sortie de partie supérieure associée est disposé dans chacun des deux canaux à fluide de partie supérieure, et/ou
- dans la position de coupure de la partie supérieure de socle, la communication fluidique de chacune des deux entrées de partie supérieure avec la sortie de corps de fond associée est coupée.
